# EUROPEAN PATENT APPLICATION

(11) **EP 1 203 915 A2**
(43) Date of publication of application: **08.05.2002**
(21) Application number: 01115684.1
(22) Date of filing: 04.07.2001
(51) Int. Cl.: F24J 2/32, F24J 2/05

(54) **Evacuated tubular collector with heat pipe**

(30) Priority: 03.11.2000 CN 00257796 U
(71) Applicant: Beijing Tsinghua Solar Systems LTD., Beijing 102205 (CN)
(72) Inventor: Zhang, Jian, Beijing 102205 (CN); Zou, Huihuang, Beijing 102205 (CN); Yin, Zhiqiang, Beijing 100084 (CN); Shi, Hongen, Beijing 102205 (CN)
(74) Representative: Reinhard - Skuhra - Weise & Partner

(57) **Abstract**

In the dry-type heat pipe all-glass evacuated tubular collector of this invention, the heat conduction structure in the manifold comprises heat conduction metal blocks (5-1), and a pipe (5-4) with heat transfer medium. The all-glass evacuated collector tubes (1-3) collect heat from solar radiation, and the heat is transferred to the heat transfer medium through metal fin (2-1), heat pipe (4-5), and heat conduction metal block (5-1). The heat pipe (4-5) does not contact directly with the medium, thus there is no scale deposits on the condenser of the heat pipe (4-5), and the heat pipe (4-5) will not be corroded. The heat pipe will have a longer life, and it is easy for assembly.

## Description

This invention relates to an all-glass evacuated tubular collector with heat pipe- dry type, which is used in the solar energy applications, and more specifically, relates to one with new type conduction structure of heat pipe .

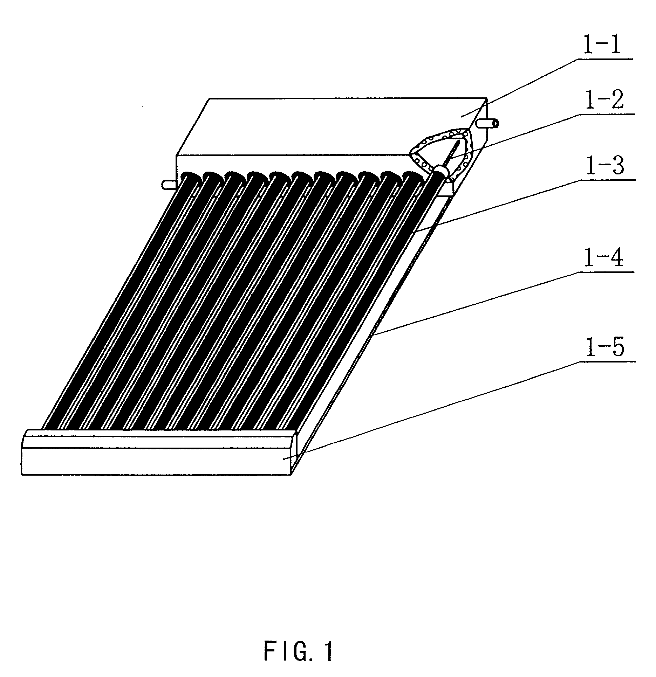

Currently, an all-glass evacuated tubular collector with heat pipe- dry type usually consists of header pipe 1-1, heat pipe 1-2, all-glass evacuated collector tube 1-3, reflector 1-4, end-support 1-5 , as shown in figure 1. the heat pipe is inserted in the header pipe 1-2 so that it can transfer the heat from the all-glass evacuated collector tubes. The condenser of the heat pipe contacts the heat medium, usually water, directly for heat exchange, which is called heat pipe-wet type all-glass evacuated tubular collector. Therefore, the heat conduction structure and the performance of the heat pipe have a great influence on the heat-exchange efficiency of the collector.

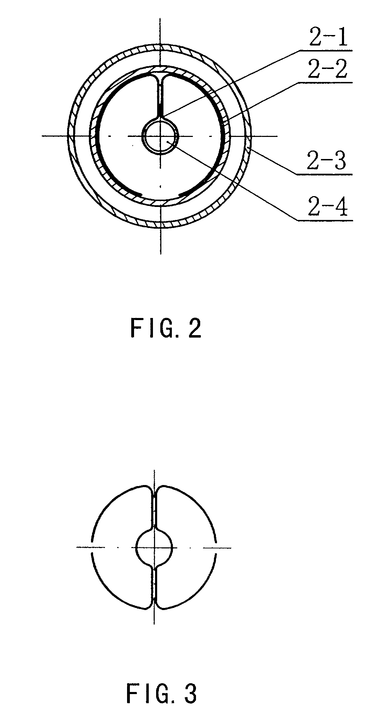

In a modified heat pipe-wet type all-glass evacuated tubular collector, the heat pipe is inserted into the cylindrical groove of the open thin-wall cylinder metal fin of the collector, and contacts tightly with the groove, while the condenser is inserted into the water tank of the solar heater, as shown in figure 2 (Referring to Chinese Patent ZL 99249224.6) . In the figure 2, 2-1 is the open thin-wall cylinder metal fin, 2-2 and 2-3 are the inner glass tube and cover glass tube of the all-glass evacuated collector tube, respectively, 2-4 is the heat pipe. In this way, the heat transferred from solar radiation absorbed by all-glass evacuated solar collector tube is passed on to the heat pipe via the open thin-wall cylinder metal fin, and later passed on to the water in the tank. Figure 3 is another metal fin in the heat conduction structure of the all-glass evacuated collector tube.

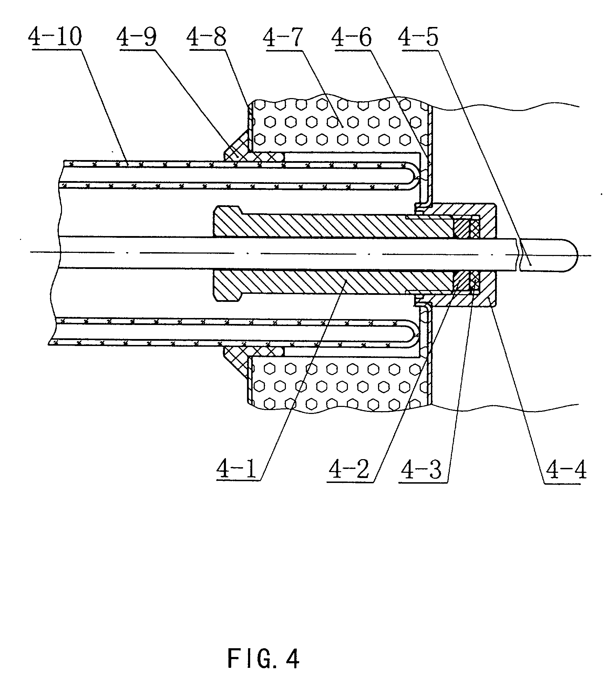

Normally the heat pipe is inserted into the manifold of the collector or the tank of close coupled all-glass evacuated tubular solar water heater using single sealing rubber ring. Such structure is unable to withstand pressure , is subject to leakage and is thus unreliable. A better approach is to use a sealing connection, which is a welded joint in the inner wall of the manifold or the wall of the water tank, and there is a rubber sealing ring and a metal back-up ring welded on the heat pipe in turn. In addition, there is a capping connected with the connection by thread. The structure is shown in figure 4: 4-1 is the capping, 4-2 is the metal back-up ring , 4-3 is the rubber sealing ring, 4-4 is the joint, 4-5 is the heat pipe, 4-6 is the manifold or the wall of the water tank , 4-7 is the insulation , 4-8 is the cover of the manifold or the tank , 4-9 is the wind shield , 4-10 is the all-glass evacuated collector tube (see 'The sealing connection of the heat pipe of the solar water system', line 21-28, page 1, patent No. 99214989.4) . The advantage of this structure is that since heat pipe contacts heat medium and transfers the heat directly, the heat transfers well and can withstand a certain pressure. The disadvantages are that 1), scale deposit may appear on the condenser of the heat pipe owing to contacting directly with heat medium , such as water, and thus affect the heat transfer efficiency. The condenser of the heat pipe may have corrosion; 2), the structure is quite complicated and not easy for assembly, and the medium, water or oil for example, is likely to leak.

The purpose of this invention is to develop a heat pipe-dry type all-glass evacuated tubular collector with new heat conduction structure to overcome the disadvantages of current technology. The heat pipe of this invention can transfer the heat to the medium quickly without direct contacts. Thus there will not be any scale deposit and the pipe will not be corrosion. The assembly using the new invention is also very easy.

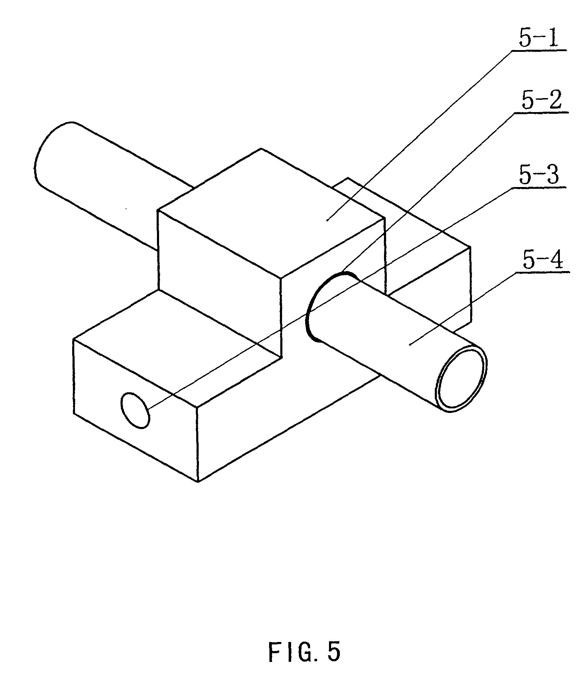

In the manifold of the heat pipe-dry type all-glass evacuated tubular collector, the heat conduction structure consists of several heat pipes, several metal fins, several heat conduction metal blocks and one pipe with heat transfer medium. There are mutually two holes in the conduction metal block being perpendicular to each other, and the pipe with heat transfer medium goes through one of the holes and fits with the gap, while the other hole fits the gap of the heat pipe. There is a space between the two neighbor heat conduction blocks.
The following is the detailed description of the invention in connection with the figures. Figure 5 is the heat conduction structure in the manifold of the heat pipe- dry type all-glass evacuated tubular collector. 5-1 is the heat conduction metal block, 5-2 is the hole which fits the gap of the pipe with medium, 5-3 is the hole which fits the gap of the heat pipe, and 5-4 is the pipe with medium. The pipe with medium passes through hole 5-2, the heat pipe is inserted into hole 5-3, the heat pipe transfer the heat to the medium in the pipe with medium via the heat conduction metal block, and thus the heat transfer is completed.

The advantage of the invention is that 1), there will be no scale deposit on the condenser of the heat pipe so that the condenser will not be corroded, and 2), the structure is simple for assembly.

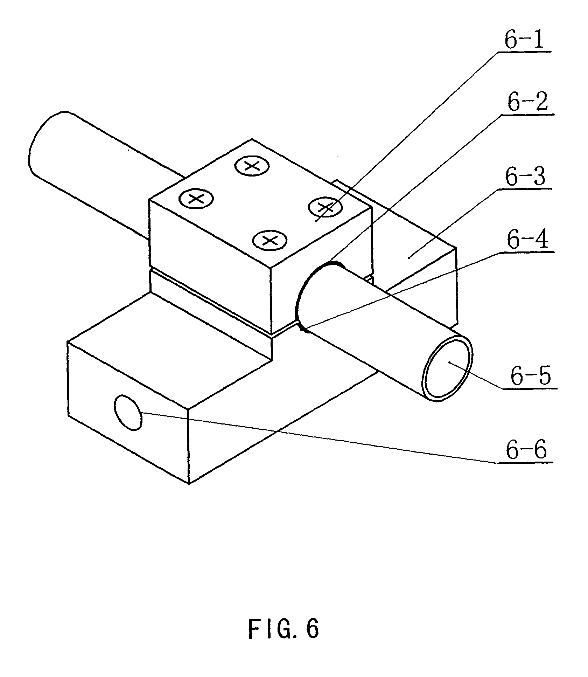

To be assembled easily, the heat conduction metal block can comprise of two parts, there is a half circular recess in the upper part, and there is another half circular recess in the lower part. There is also a hole in the middle lower part, which is perpendicular to the hole formed by the two half circular recess. The two separated parts are fastened together by the screws. It is shown in figure 6. 6-1 is the upper part which has a half circular recess 6-2 whose radius is equal to that of the pipe with medium, 6-3 is the lower part, 6-4 is the half circular recess whose radius is equal to that of the pipe with medium and form a whole hole together with the recess 6-2, 6-5 is the pipe with medium, 6-6 is the hole that fits the gap of the heat pipe. The two parts are fastened together with screws. To make the heat conduction metal block contact tightly to the pipe with medium, we can make the recess smaller than the half circular so as to increase the heat transfer efficiency. In addition, we can paint heat-conductive glue in the hole to further increase the transfer efficiency.

### Explanation of the figures

Figure 1 is the structure of wet-type heat pipe all-glass evacuated tubular collector of prior art;

Figure 2 is the heat conduction structure of prior art;

Figure 3 is another metal fin of the heat conduction structure of prior art;

Figure 4 is the sealing connection structure of the pipe of the solar water system of prior art;

Figure 5 is the heat conduction structure of the heat pipe according to this invention;

Figure 6 is the heat conduction structure of the heat pipe comprised the two metal blocks according to this invention;

Figure 7 is the heat conduction structure of the example according to this invention.

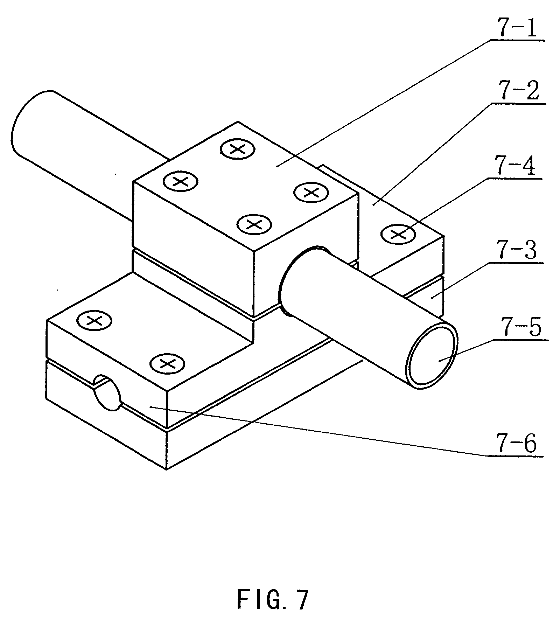

Figure 7 is an example of this invention. The heat conduction metal block comprises three parts: upper 7-1, middle 7-2 and lower 7-3. There is one half circular recess in the upper and lower part, respectively. There is one half circular recess in the lower and upper side of the middle part, and the three parts form two holes being perpendicular to each other., and the three parts are fastened together by screws 7-4. 7-5 is the pipe with medium, and 7-6 is the hole inserted by the heat pipe. To make the heat conduction metal block contact tightly with the pipe with medium and the heat pipe, the radius of recess can be smaller than that of the pipe with heat transfer medium for increasing the heat transfer efficiency. There can be two or more holes in one conduction metal block that fit two or more the heat pipes.

## Claims

1. A heat pipe-dry type all-glass evacuated tubular collector, wherein the heat conduction structure in the manifold consists of several metal fins, several heat pipes, several heat conduction metal blocks and one pipe with heat transfer medium, there are two holes in the conduction metal block being perpendicular to each other, and the pipe with heat transfer medium goes through one of the holes and fits with the gap, while the other hole fits the gap of the heat pipe, there is a space between two neighbor heat conduction blocks.

2. The heat pipe- dry type all-glass evacuated solar collector according to claim 1, wherein the conduction metal block can comprise of two parts, there is a half circular recess in the upper part, and there is a half circular recess in the upside of the lower part as well, and in the downside of the lower part, there is a hole which is perpendicular to the hole made up of the two half circular recess, the two parts are fastened together by screws.

3. The heat pipe-dry type all-glass evacuated tubular collector according to claim 1, wherein the conduction metal block can be made up of three parts, there is one half circular recess in the upper and lower part, respectively, and there are two recesses in the upside and the downside of the middle part, respectively, the middle part forms one hole with the upper part and the lower part, respectively, these two holes are perpendicular to each other, and the three parts are fastened together by screws.

4. The heat pipe-dry type all-glass evacuated tubular collector according to any one of the claims 2 and 3, wherein the radius of recess can be smaller than that of the pipe with heat transfer medium.

5. The heat pipe-dry type all-glass evacuated tubular collector according to any one of the claims 1, 2 and 3, wherein the holes mentioned above can be paint conductive glue.

6. The heat pipe-dry type all-glass evacuated tubular collector according to any one of the claims 1, 2 and 3 , wherein there can be two or more holes in the conduction metal block that fit the heat pipes.
